Europäisches Patentamt

European Patent Office

Office européen des brevets

(19)

(11) Veröffentlichungsnummer: **0 395 975**
**A1**

(12) # EUROPÄISCHE PATENTANMELDUNG

(21) Anmeldenummer: **90107634.9**

(51) Int. Cl.5: **H01M 8/24**

(22) Anmeldetag: **23.04.90**

(30) Priorität: **29.04.89 DE 3914244**

(43) Veröffentlichungstag der Anmeldung:
**07.11.90 Patentblatt 90/45**

(84) Benannte Vertragsstaaten:
**CH DE FR GB IT LI NL SE**

(71) Anmelder: **Asea Brown Boveri**
**Aktiengesellschaft**
**Kallstadter Strasse 1**

**D-6800 Mannheim 31(DE)**

(72) Erfinder: **Rohr, Franz-Josef, Dr.**
**Forstweg 2**
**D-6941 Abtsteinach(DE)**

(74) Vertreter: **Rupprecht, Klaus, Dipl.-Ing. et al**
**c/o Asea Brown Boveri Aktiengesellschaft**
**Zentralbereich Patente Postfach 100351**
**D-6800 Mannheim 1(DE)**

(54) **Brennstoffzellenanordnung und Verfahren zu deren Herstellung.**

(57) Die Erfindung bezieht sich auf eine Brennstoff-zellenanordnung mit mindestens einer Brennstoffzelle (1Z), die einer Anode (4), einer Kathode (2) und einen ionenleitenden Festelektrolyten (3) aufweist. Der Erfindung liegt die Aufgabe zugrunde, eine Brennstoffzellenanordnung (1) zu schaffen, die den technischen Anforderungen genügt, und kostengünstig hergestellt werden kann. Erfindungsgemäß sind mehrere Brennstoffzellen (1Z) zu einem Brennstoff-zellenblock (1) zusammengefaßt.

F i g.4

EP 0 395 975 A1

Die Erfindung bezieht sich auf eine Brennstoff-zellenanordnung mit wenigstens einer Brennstoff-zelle gemäß dem Oberbegriff des Patentanspruches 1, sowie auf ein Verfahren zu deren Herstellung.

Eine solche Brennstoffzellenanordnung kann bspw. als Stromquelle genutzt werden. Aus der Informationsschrift "High Temperature Fuell Cells", Solid Electrolyts, 1978, F.J. Rohr, ist eine keramische Brennstoffzelle mit sauerstoffionenleitendem Festelektrolyten sowie einer Anode und einer Kathode bekannt. Diese Einrichtung ermöglicht es, bei Temperaturen von mehr als 800 °C die chemische Energie eines Brennstoffs, z.B. von Kohle, Erdöl, Erdgas oder Wasserstoff durch elektrochemische Oxidation mit Sauerstoff direkt in elektri-sche Energie umzuwandeln. Die Energieumwand-lung erfolgt mit einem Wirkungsgrad, der größer ist als 50 %. Es sind Brennstoffzellenanordnungen bekannt, die durch das Zusammenfassen und in Reihe schalten von mehreren einzelnen Brennstoffzellen gebildet werden. Diese Anordnungen sind für einen dauerhaften Betrieb wenig geeignet. Für ihre Herstellung sind hohe Material- und Fertigungskosten erforderlich.

Der Erfindung liegt die Aufgabe zugrunde, eine Brennstoffzellenanordnung zu schaffen, die den Anforderungen eines technischen Einsatzes genügt und auf einfache Weise hergestellt werden kann.

Gegenüber den bekannten Brennstoffzellen-ordnungen, die aus röhren- oder plattenförmigen Brennstoffzellenelementen zusammengesetzt sind, bietet die aus dichten und porösen Schichten auf-gebaute Brennstoffzellenanordnung den Vorteil ei-ner hohen Leistungsdichte. Ein erfindungsgemäßer Brennstoffzellenblock mit einer Abmessung von 10x10x10 cm$^3$ liefert etwa 1 kW bei einer Spannung von 40 bis 50 V. Durch die Zusammenfassung der Brennstoffzellen zu einer Einheit in Form eines Brennstoffzellenblocks, der aus einer Vielzahl von Schichten aufgebaut ist, ist die Möglichkeit einer einfachen Serienschaltung von mehreren Brennstoffzellen gegeben. Die Versorgung der Brennstoffzellen mit Brennstoff und Luft ist durch die Anordnung von Kanälen in dem Brennstoffzellenblock auf einfache Weise möglich. Das gleiche gilt für die Ableitung der überschüssigen Luft, der Reaktionsprodukte und des nicht verbrannten Brennstoffs. Die Kühlung der Brennstoffzellenanordnung ist über die Kanäle, welche den Brennstoffzellenblock durchziehen, ebenfalls auf einfache Weise möglich. Da der Block beliebig groß, bzw. beliebig klein ausgebildet werden kann, ist es leicht, die Brennstoffzellenanordnung auf die gewünschte Leistung abzustimmen. Die Herstellung der Brennstoffzellenanordnung ist sehr kostengünstig, da eine Massenfertigung der für den Aufbau eines Brennstoffzellenblocks erforderlichen Folien gegeben ist. Die bei der Folienfertigung angewendeten Verfahren gehören bereits zum Stand der Technik und sind deshalb problemlos anwendbar. Weitere erfindungswesentliche Merkmale sind in den Unteransprüchen gekennzeichnet.

Die Erfindung wird nachfolgend anhand einer schematischen Zeichnung dargestellt.

Es zeigen:

Fig. 1 einen erfindungsgemäßen Brennstoffzellenblock in auseinandergezogener Darstellung,

Fig. 2 die für den Brennstoffzellenblock verwendeten Folien von oben gesehen,

Fig. 3 einen Schnitt durch die für den Aufbau des Brennstoffzellenblocks verwendeten Folien,

Fig. 4 einen Schnitt durch einen vollständigen Brennstoffzellenblock.

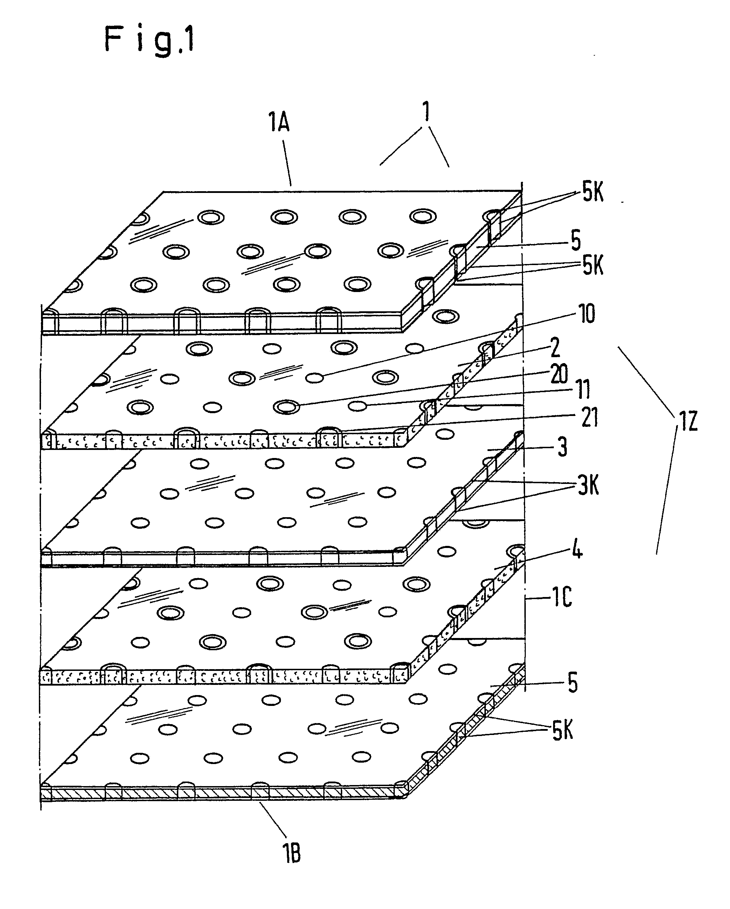

Fig. 1 zeigt einen Ausschnitt aus einem Brennstoffzellenblock 1 mit den für den Aufbau erforderlichen Schichten 2,3,4,5. Zur besseren Übersicht sind die Schichten 2,3,4 und 5 nicht direkt aneinandergrenzend angeordnet, sondern zwischen jeder Schicht ist ein Zwischenraum belassen. In betriebsbereiten Brennstoffzellenblock 1 sind alle Schichten 2,3,4,5 aufeinander gestapelt. Für die Ausbildung des erfindungsgemäßen Brennstoffzellenblocks 1 sind mindestens eine als Kathode dienende Schicht 2, eine als Festelektrolyt dienende Schicht 3, eine als Anode dienende Schicht 4 sowie elektrisch leitende Schichten 5 erforderlich, wobei die Schichten 5 für die elektrische Verbindung zwischen den Brennstoffzellen 1Z eines jeden Brennstoffzellenblocks 1 vorgesehen sind. Den Schichten 2 wird Luft zugeführt, den Schichten 4 der Brennstoff und die Schichten 3 übernehmen die ionenleitende Trennschicht zwischen der Kathode 2 und der Anode 4. Durch die in Fig. 1 dargestellte Schichtenfolge wird ein Brennstoffzellenblock 1 gebildet, der die minimale Anzahl von erforderlichen Schichten 2,3,4,5 aufweist. Erfindungsgemäß besteht die Möglichkeit, diesen Block 1 beliebig zu erweitern, in dem an jede elektrisch leitende Schicht 5 wieder eine kathodische Schicht 2 bzw. eine anodische Schicht 4 angefügt wird. Die Größe eines Brennstoffzellenblocks 1 kann von einigen Kubikzentimetern bis einigen Kubikdezimetern und mehr betragen. Die Schichten 2,3,4 und 5 werden durch Folien gebildet, die in einem separaten Her-stellungsverfahren gefertigt und anschließend auf-einandergestapelt werden. Während eines Brenn-und anschließenden Sintervorgangs werden die Schichten 2,3,4 und 5 bei einer definierten Temperatur dauerhaft zusammengefügt. Wie anhand von Fig. 1 zu sehen ist, sind die Schichten 2,3,4 und 5 von Kanälen 10,11,20 und 21 durchsetzt. Die Kanäle 10,11,20 und 21 verlaufen senkrecht zu den Oberflächen der Schichten 2,3,4 und 5. Mit Hilfe der Kanäle 10 11,20,21 wird den Schichten 2 bzw. 4 die erforderliche Luft und der Brennstoff zugeführt, Abluft aus dem Block 1 abgeleitet und Reaktionsprodukte und überschüssiger Brennstoff entsorgt. Mit Hilfe der Kanäle 10 wird den als Kathode dienenden Schichten 2, bei dem in Fig. 1 dargestellten Ausführungsbeispiel ist nur eine solche Schicht 2 vorhanden, Luft zugeführt. Die Abluft wird über die Kanäle 11 abgeleitet. Mit Hilfe der Kanäle 20 wird den anodischen Schichten 4 der gasförmige Brennstoff zugeleitet. Reaktionsprodukte und überschüssiger Brennstoff werden über die Kanäle 21 abgeleitet. Die Kanäle 10 sind im Bereich der Schichten 3,4,5 zu diesen Schichten hin gasdicht verschlossen, so daß in diesen Bereichen keine Luft aus den Kanälen 10 austreten kann. Lediglich im Bereich einer jeden Schicht 2 sind die Kanäle 10 luftdurchlässig und können so die Schichten 2 mit Luft versorgen. Zur Ableitung der Abluft sind die Kanäle 11 in entsprechender Weise ausgebildet. Die Zufuhr von gasförmigem Brennstoff zu den anodischen Schichten 4 erfolgt über die Kanäle 20. Die Kanäle 20 sind lediglich im Bereich der anodischen Schichten 4 gasdurchlässig, im Bereich der übrigen Schichten 2,3,5 sind ihre Wände gasdicht verschlossen. In gleicher Weise sind die Kanäle 21, die zur Entsorgung vorgesehen sind, ausgebildet.

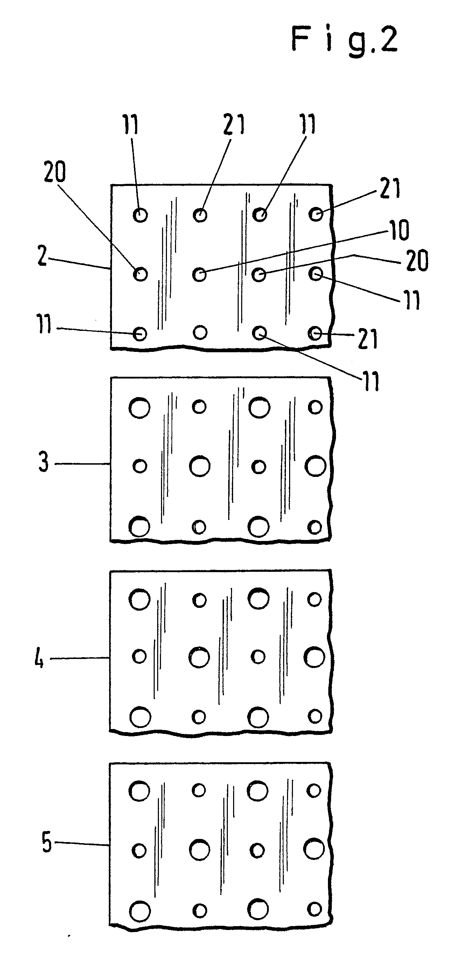

Fig. 2 zeigt einen Teil der Schichten 2,3,4 und 5 im Bereich ihrer Oberflächen. Wie dieser Darstellung zu entnehmen ist, ist jeder Kanal 10 von vier Kanälen 11 umgeben, die alle den gleichen Abstand von dem Kanal 10 aufweisen. Bei dem hier dargestellten Ausführungsbeispiel ist der Kanal 10 jeweils im Mittelpunkt eines Quadrats angeordnet, während sich die Kanäle 11 in den Eckpunkten dieses Quadrates befinden. In gleicher Weise ist jeder Kanal 20 positioniert. Hierbei sind ebenfalls vier Kanäle 21 in gleichem Abstand vom Kanal 20 angeordnet. Der Abstand der Kanäle 10 und 11 bzw. 20 und 21 beträgt 1 bis 5 cm.

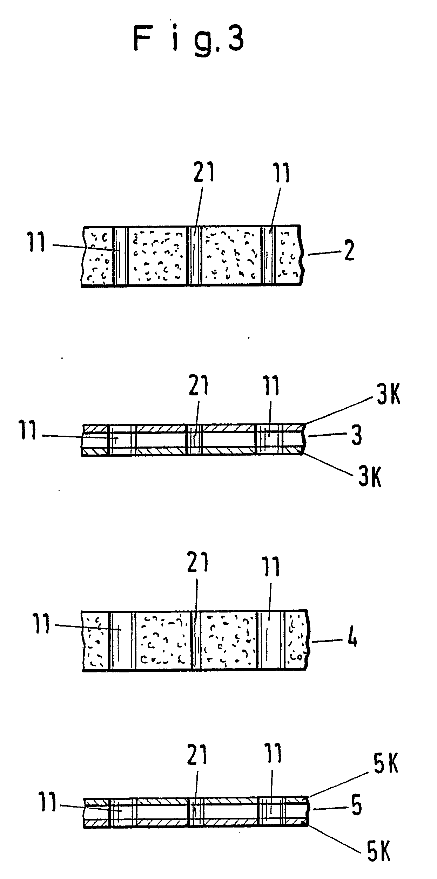

Fig. 3 zeigt einen Vertikalschnitt durch die Schichten 2,3,4 und 5 im Bereich der Kanäle 11 und 21. Wie dieser Darstellung zu entnehmen ist, weisen die Kanäle 11 und 21 in unterschiedlichen Schichten 2,3,4,5 unterschiedliche Durchmesser auf. Das gleiche gilt für die Kanäle 10 und 20 (hier nicht dargestellt). Die Durchmesser der Kanäle 10,11,20,21 sind abhängig von der Länge der Kanäle, die wiederum durch die Höhe des Brennstoffzellenblocks 1 bestimmt wird. Die den kathodischen Schichten 2 zuzuführende Luftmenge muß um ein Vielfaches größer sein als die den anodischen Schichten 4 zugeführte Brennstoffmenge. Deshalb ist auch die abzuführende Luftmenge entsprechend größer als die Menge der Reaktionsprodukte und die Menge des überschüssigen Brennstoffs. Es kann davon ausgegangen werden, daß die Durchmesser der Kanäle 10 und 11 zwei- bis dreimal größer auszubilden sind, als die Durchmesser der Kanäle 20 und 21. Die Anordnung der Kanäle 10,11,20,21 ist nicht an die hier beschriebene Ausführungsform gebunden. Vielmehr sind alle Möglichkeiten erlaubt, die eine optimale Versorung und Entsorgung sicherstellen.

Das Druckgefälle zwischen den Kanälen 10 und 11 bzw. den Kanälen 20 und 21 wird so eingestellt, daß innerhalb der kathodischen bzw. anodischen Schichten 2 bzw. 4 die Luft bzw. der Brennstoff und die Reaktionsprodukte nur in Richtung der zur Ableitung bestimmten Kanäle 11 bzw. 21 strömen. Die Verteilung der Luft und des Brennstoffes bzw. die Ableitung der nicht verbrauchten Luft bzw. des überschüssigen Brennstoffs und der Reaktionsprodukte erfolgt beispielsweise über Gasverteilerplatten, die an den Stirnflächen 1A und 1B eines jeden Brennstoffzellenblocks 1 angeordnet werden können.

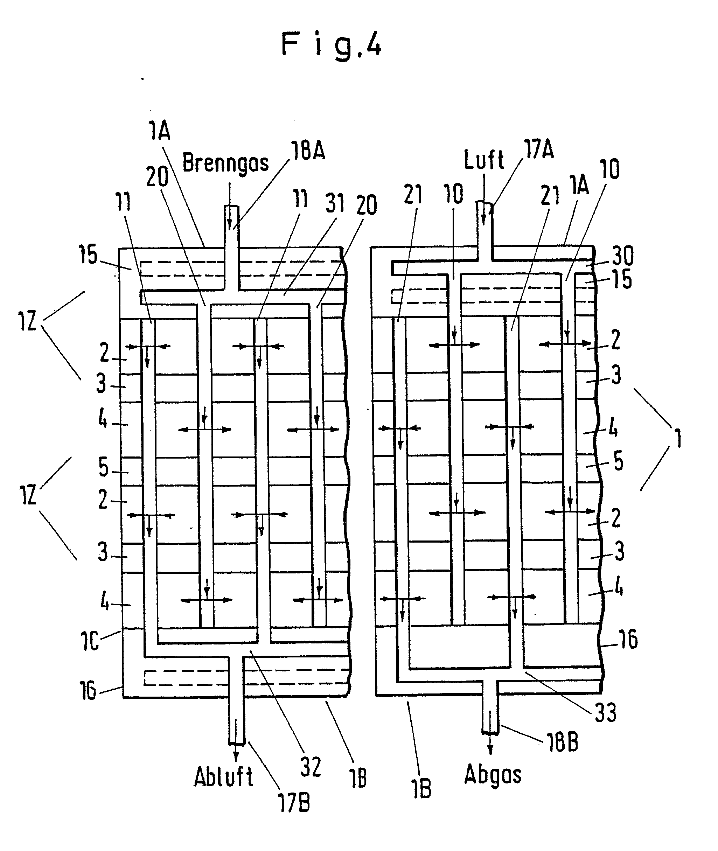

Fig. 4 zeigt Abschnitte eines Brennstoffzellenblocks 1, der an seinen Stirnflächen 1A und 1B mit Gasverteilerplatten 15 und 16 versehen ist. Über die Gasverteilerplatte 15 wird dem Brennstoffzellenblock 1 Luft und gasförmiger Brennstoff zugeführt. Die Gasverteilerplatte 15 ist hierfür mit einer Zuleitung 17A für Luft und eine Zuleitung 18A für den Brennstoff versehen. Innerhalb der Gasverteilerplatte 15 sind Kanäle 30 und 31 vorgesehen. Über die Kanäle 30 wird die Luft den Kanälen 10 zuge leitet. Über die Kanäle 31 erfolgt die Zuleitung des gasförmigen Brennstoffs zu den Kanälen 20. Wie Figur 4 weiter zu entnehmen ist, kann die Luft aus den Kanälen 10 in die Schichten 2 einströmen. Der in den Kanälen 20 strömende Brennstoff kann in die Schichten 4 eindringen. Die nicht verbrauchte Luft wird über die Kanäle 11 und den Kanal 32 in der Gasverteilerplatte 16 nach außen abgeleitet. Die sich bildenden Reaktionsstoffe und der überschüssige Brennstoff werden über die Kanäle 21 dem Kanal 33 in der Gasverteilerplatte 16 zugeführt und von dort über die Leitung 18B aus nach außen abgeleitet. Die Gasverteilerplatten 15 und 16 sind aus einem elektrisch leitenden Material gefertigt, so daß sie gleichzeitig als positiver bzw. negativer Stromabnehmer dienen können.

Nachfolgend wird die Herstellung eines Brennstoffzellenblocks 1 beschrieben. Die Schichten, welche den Brennstoffzellenblock bilden, werden, wie bereits oben erwähnt, durch Folien 2,3,4 und 5 gebildet. Diese Folien 2,3,4 und 5 werden zunächst einzeln aus einem Mischoxid hergestellt. Für die Fertigung kann bspw. die bekannte Foliengießtechnik oder das Siebdruckverfahren angewendet werden. Für die Herstellung der Folien 2,3,4 und 5 wird zunächst eine Gießmasse aus den Pulvern des anorganischen Mischoxids ausgebildet. Für die Ausbildung der Folien 3 wird als Material Zirkoniumdioxid verwendet, das mit 8 bis 10 Mol.% Yttriumoxid dotiert ist. Werkstoffe mit Perowskitstruktur werden zur Herstellung der Folien 2 und 5 verwendet und Zirkoniumdioxid Cermets mit Nickel für die Folien 4. Die gasdichten Schichten werden aus einem Pulver hergestellt, das eine Korngröße von 0,1 bis 3 μm aufweist. Zur Ausbildung der porösen Schichten wird ein Mischoxidpulver mit einer Korngröße zwischen 10 und 100 μm benutzt. Die Dichte oder Porosität der Folien 2,3,4 und 5 kann durch die Zugabe definierter Mengen an organischen Binde- und Dispersionsmitteln in Form von Mischungen aus einfachen Alkoholen und Polyalkoholen beeinflußt werden. Bei der Wahl des für die Fertigung der Folien 2,3,4 und 5 verwendeten Werkstoffs sollte darauf geachtet werden, daß diese einen Ausdehnungskoeffizient aufweisen, der bei 1000 °C etwa 10,5x10$^{-6}$/Grad beträgt. In jedem Fall muß sichergestellt werden, daß das für die Fertigung des Festelektrolyten verwendete Material gleichzeitig die Eigenschaft eines Sauerstoffionenleiters aufweist. Für die Fertigung der Folien 2 und 4, die die Eigenschaften von Kathoden bzw. Anoden aufweisen und elektronenleitend sein müssen, wird vorzugsweise eine Mischung oder eine Cermet aus $La_{1-x}Sr_xMnO_3 + ZrO_2/Y_2O_3$ (Strontium dotiertes Lanthanmanganit und Yttrium dotiertes Zirkoniumdioxid) bzw. $Ni + ZrO_2/Y_2O_3$ (Nickel und Yttrium dotiertes Zirkoniumdioxid) verwendet. Für die Folien 3 und 5, welche als Festelektrolyte und elektrisch leitende Interkonnektor-Schichten vorgesehen sind, wird vorzugsweise $ZrO_2/Y_2O_3$ (Yttrium dotiertes Zirkoniumdioxid) bzw. $LaMg_xCr_{1-x}O_3$ - (Magnesium dotiertes Lanthanchromit) verwendet, wobei diesem Material zusätzlich organische Binde- und Dispersionsmittel in Form einer Mischung aus einfachen Alkoholen und Polyalkoholen zugesetzt werden. Die als Festelektrolyte und elektrisch leitende Interkonnektor-Schichten dienenden Folien 3 und 5 werden zunächst gemäß einem der oben beschriebenen Verfahren hergestellt. Anschließend werden ihre Oberflächen mit dünnen Kontaktschichten 3K und 5K überzogen, wie in Fig. 3 dargestellt. Diese Kontaktschichten 3K und 5K können bspw. durch Siebdruck aus einer Lösung oder einer Suspension gebildet werden. Für die Ausbildung der Kontaktschichten 3K und 5K wird auf der Kathodenseite Kathodenmaterial verwendet, wie es zur Fertigung der Folien 2 benutzt wird, bzw. auf der Anodenseite Anodenmaterial wie es für die Folien 4 verwendet wird. Nach dem Fertigen der Folien 2,3,4 und 5 werden diese so zugeschnitten, daß ihre Flächen dem Querschnitt des zu fertigenden Brennstoffzellenblocks 1 entsprichen. Die gasdichten Folien 3 und 5, die als Festelektrolyte bzw. elektrisch leitende Schichten dienen, werden 0,05 bis 0,1 mm dick ausgebildet, während die als Kathoden bzw. Anoden dienenden Folien 2 und 4 0,1 bis 1 mm dick ausgebildet werden. Im Anschluß daran werden die Folien mit Löchern versehen, die nach dem Aufeinandersetzen der Folien 2,3,4, und 5 zu dem gewünschten Brennstoffzellenblock die Kanäle 10,11,20 und 21 bilden. Die Löcher 10 und 11 werden in den Folien 3,4 und 5 mit einem Durchmesser von 2,5 bis 6 mm ausgebildet. In den Folien 2, die als Kathoden dienen, werden die Löcher 10 und 11 mit einem Durchmesser ausgebildet, der um 0,5 bis 1 mm kleiner ist. Vorzugsweise haben die Kanäle 10 und 11 in den Folien 2 einen Durchmesser von 2 bis 5 mm. Die Löcher 20 und 21 werden in den Folien 2,3 und 5 mit einem Durchmesser von 1,5 bis 4 mm ausgebildet. In den als Anoden dienenden Folien 4 weisen die Löcher 20 und 21 einen Durchmesser von 1 bis 3 mm auf, der also um 0,5 bis 1 mm kleiner ist als in den Folien 2,3 und 5. Die Folien 2,3,4,5 werden gemäß der in Fig. 4 dargestellten Reihenfolge zur Ausbildung eines Brennstoffzellenblocks 1 aufeinandergesetzt. Lediglich die Reihenfolge der Folien 2,3,4 und 5 ist vorgeschrieben, ihre Anzahl ist jedoch nicht auf die in Fig. 4 dargestellte Anzahl beschränkt. Vielmehr kann ein Brennstoffzellenblock 1 wesentlich größer ausgebildet werden. Die Minimalgröße eines Brennstoffzellenblocks 1 umfaßt eine Folie 2, eine Folie 3, eine Folie 4 und an den Stirnflächen 1A und 1B entweder eine Gasverteilerplatte 15 bzw. 16 oder eine elektrisch leitende Folie 5, die gleichzeitig als Stromabnehmer dient. Dabei ist darauf zu achten, daß die aus den Folien ausgestanzten Löcher so übereinander angeordnet werden, daß die Kanäle 10,11,20,21 gebildet werden. Hierfür wird vorzugsweise eine Montagerahmen verwendet, der senkrechte Führungsstifte aufweist, die genau durch die Löcher der Folien 2,3,4,5 gesteckt werden können. Der so aufeinander gesetzte Stapel von Folien 2,3,4,5, der pro cm Höhe aus 16 bis 20 Folien bzw. 4 bis 5 solcher Brennstoffzellen 1Z bestehen kann, wird während eines zeitlich definierten Trocknungs- , Brenn- und Sinterprozesses in einen keramischen Block mit der gewünschten Schichtstruktur umgewandelt. Während der Trocknungsphase werden bei einer Temperatur von 100 bis 300 °C und vermindertem Druck über einen Zeitraum von 1 bis 4 Stunden die organischen Lösungsmittel aus den Folien 2,3,4,5 entfernt. In der nachfolgenden Brennphase werden bei 300 bis 1000 °C in Gegenwart von Sauerstoff bzw. Luft alle in den Folien 2,3,4,5 vorhandenen organischen Verbindungen der verwendeten Binde- und Dispersionsmittel verbrannt und zu gasförmigen Reaktionsprodukten umgesetzt, so daß die Folien 2,3,4 und 5 bzw. die nach dem Brennvorgang gebildeten Schichten nur noch aus Mischoxiden bestehen. Die Dauer des Brennprozesses beträgt etwa 2 bis 5 Stunden. Das sich an den Brennprozeß anschließende Sinterverfahren wird bei einer Temperatur von 1000 bis 1500 °C durchgeführt, dabei werden in dem Brennstoffzellenblock 1 gasdichte Schichten 3 und 5 und poröse Schichten 2 und 4 sowie die Kanäle 10,11,20 und 21 gebildet. Das Sinterverfahren dauert je nach Größe des Brennstoffzellenblocks 1 zwei bis zehn Stunden. Zur Abdichtung der Kanäle 10 und 11 zu den Schichten 3,4,5 sowie zur Abdichtung der Kanäle 20, 21 zu den Schichten 2,3,5 hin sowie zur Vermeidung von Gasverlusten und elektrischen Kurzschlüssen an den Außenflächen des Brennstoffzellenblocks 1 werden in den Kanälen 10,11,20 und 21 und auf den Außenflächen 1C des Brennstoffzellenblocks 1 gasdichte elektrisch isolierende Schichten aus einem Spinell in der Form von $MgAl_2O_3$ oder eine Sinterglaskeramik in Form von $MgO \cdot Al_2O_3 \cdot ZrO_2$ aufgetragen. Hierfür wird eine feinpulvrige Suspension aus dem oben genannten Werkstoff gebildet.Anschließend wird der gesamte Brennstoffzellenblock 1 in die Suspension getaucht. Vor dem Eintauchen des Blocks werden die Stirnflächen der Gasverteilerplatten 15 und 16, bzw. falls nur elektrisch leitende Schichten 5 verwendet werden, die Oberflächen 1A und 1B dieser Schichten 5 mit einem Werkstoff maskiert, der später wieder entfernt werden kann, so daß diese Flächen 1A und 1B später wieder frei gelegt werden können. Nach dem Trocknen der Suspension wird diese unter Bildung einer dichten Glasur bei 1000 bis 1300 °C gebrannt. Nach dem Brennen wird die Glasur in den Kanälen 10 und 11 im Bereich der als Kathoden dienenden Schichten 2 durch Nachbohren wieder entfernt. Das gleiche gilt für die Kanäle 20 und 21 im Bereich der anodischen Schichten 4. Dieses Nachbohren im Bereich der kathodischen und anodischen Schichten 2 und 4 ist deshalb möglich, weil die Kanäle 10 und 11 bzw. 20 und 21 im Bereich der o.g. Schichten 2 und 4 mit einem Durchmesser ausgebildet sind, der 0,5 bis 1 mm kleiner ist als die Durchmesser der Kanäle in den übrigen Schichten. Die Größe des Bohrers muß so bemessen sein, daß die Glasur in den übrigen Schichten 3 und 5 nicht verletzt wird, aber eine vollständige Entfernung der Glasur in den Schichten 2 und 4 in den jeweiligen Kanälen 10,11 bzw. 20 und 21 sichergestellt wird. Hierdurch wird erreicht, daß Luft und Abluft nur in die als Kathode dienenden Schichten 2 einströmen bzw. von dort ausströmen kann und Brennstoff, Abgase und Reaktionsprodukte können damit nur in die als Anode dienenden Schichten 4 eingeleitet bzw. von dort abgeleitet werden. Die für die Gasverteilung vorgesehenen Platten 15 und 16 werden ebenfalls separat hergestellt und anschließend mit dem Brennstoffzellenblock 1 so verbunden, daß die in den Gasverteilerplatten 15 und 16 vorgesehenen Kanäle 30,31,32,33 mit den entsprechenden Kanälen 10,11 20 und 21 verbunden werden. Die Gasverteilerplatten 15 und 16 werden ebenfalls aus keramischem Material und so wie die Folien gefertigt und zusammen mit den übrigen Folien 2,3,4

und 5 zu dem gewünschten Brennstoffzellenblock 1 gebrannt und gesintert. Durch eine geeignete Beschichtung mit einem elektrisch leitenden Werkstoff in Form von $Ni/ZrO_2$, $La_{1-x}Sr_xMnO_3$ oder $La_{1-x}Sr(Mg)_xCrO_3$ können die Gasverteilerplatten 15 und 16 gleichzeitig als Stromabnehmer oder für die elektrische Verschaltung mehrer der oben beschriebenen Brennstoffzellenblöcke 1 verwendet werden. Eine andere Gestaltung der Gasverteilerplatten bzw. der als End- und Stromabnehmerplatten dienenden Bauelemente 15 und 16 ist selbstverständlich möglich.

## Ansprüche

1. Brennstoffzellenanordnung mit wenigstens einer Brennstoffzelle (1Z), die eine Anode (4), eine Kathode (2) und einen ionenleitenden Festelektrolyten (3) aufweist, dadurch gekennzeichnet, daß zwei oder mehrere Brennstoffzellen (1Z) unlösbar zusammengefaßt sind.

2. Brennstoffzellenanordnung nach Anspruch 1, dadurch gekennzeichnet, daß die Brennstoffzellen (1Z) zu einem Brennstoffzellenblock (1) zusammengefaßt sind.

3. Brennstoffzellenanordnung nach Anspruch 1 oder 2, dadurch gekennzeichnet, daß der Brennstoffzellenblock (1) durch alternierendes Aufeinanderstapeln von Folien (2,3,4 und 5) gebildet ist, die als Kathoden (2), Festelektrolyte (3), Anoden (4) und elektrisch leitende Schichten (5) zur Verbindung der einzelnen Brennstoffzellen (1Z) dienen.

4. Brennstoffzellenanordnung nach einem der Ansprüche 1 bis 3, dadurch gekennzeichnet, daß jeder Brennstoffzellenblock (1) aus mindestens einer Schicht (2.3,4) und zwei Schichten (5) aufgebaut ist, daß die beiden äußeren Schichten (5) elektrisch leitend ausgebildet sind, die mittlere Schicht (3) als Festelektrolyt dient, und daß zwischen der ersten äußeren Schicht (5) und der mittleren Schicht (3) eine als Kathode dienende Schicht (2) und zwischen der zweiten äußeren Schicht (5) und der mittleren Schicht (3) eine als Anode dienende Schicht (4) angeordnet ist.

5. Brennstoffzellenanordnung nach einem der Ansprüche 1 bis 4, dadurch gekennzeichnet, daß der Brenn stoffzellenblock (1) beidseitig der elektrisch leitenden Schicht (5) durch Anordnung einer als Anode dienenden Schicht (4) bzw. einer als Kathode dienenden Schicht (2) beliebig erweiterbar ist.

6. Brennstoffzellenanordnung nach einem der Ansprüche 1 bis 5, dadurch gekennzeichnet, daß die als Kathoden und Anoden dienenden Folien gasdurchlässig ausgebildet und zwischen 0,1 mm und 1 mm dick ausgebildet sind, daß die gasdichten als Festelektrolyte dienenden Schichten (3) und die als elektrisch leitenden Schichten (5) beidseitig auf ihren Oberflächen eine Kontaktschicht (3K, 5K) aufweisen und 50 μm bis 200 μm dick ausgebildet sind, daß die gasdurchlässigen kathodischen Schichten (2) aus $La_{1-x}Sr_xMnO_3$ mit einem Zusatz an stabilisiertem $ZrO_2$ und die gasdurchlässigen anodischen Schichten (4) aus $Ni/ZrO_2$- bzw. $NiO/ZrO_2$-Cermet mit oder ohne Zusatz an stabilisiertem $ZrO_2$ gefertigt und die als Festelektrolyte dienenden gasdichten Schichten (3) aus $(ZrO_2)_{0,9}$- $(Y_2O_3)0,1$ oder $(ZrO_2)_{0,92}(Y_2O_3)0,04(Yb_2O_3)0,04$ hergestellt sind, und daß die elektrisch leitenden gasdichten Schichten (5) aus $(La_{1-x})Sr_xCrO_3$ oder $LaMg_xCr_{1-x}O_3$ mit einem Zusatz an stabilisiertem $ZrO_2$ bestehen.

7. Brennstoffzellenanordnung nach einem der Ansprüche 1 bis 6, dadurch gekennzeichnet, daß jeder Brennstoffzellenblock (1) mit Kanälen (10,11) für die Zu- und Ableitung von Luft und mit Kanälen (20,21) für die Zu- und Ableitung des Brennstoffs bzw. der Reaktionsprodukte versehen ist, daß die Kanäle (10,11,20,21) senkrecht zu den Schichten (2,3,4 und 5) verlaufen und den Brennstoffzellenblock (1) vollständig durchsetzen, daß jeder für die Luftzufuhr vorgesehene Kanal (10) von jeweils mindestens vier Kanälen (11) für die Ableitung der Luft umgeben ist, daß die Kanäle (11) für die Abluft alle den gleichen Abstand von dem Kanal (10) aufweisen, und daß zu jedem für die Brennstoffzufuhr vorgesehenen Kanal (20) die entsprechenden für die Ableitung des überschüssigen Brennstoffs vorgesehenen Kanäle (21) in gleicher Weise angeordnet sind, und daß der senkrechte Abstand zwischen zwei Kanälen (10,11,20,21) 1 bis 5 cm beträgt.

8. Brennstoffzellenanordnung nach einem der Ansprüche 1 bis 7, dadurch gekennzeichnet, daß die für die Zu- und Ableitung der Luft vorgesehenen Kanäle (10,11) in den als Kathode dienenden Schichten (2) einen Durchmesser von 0,5 bis 1 mm aufweisen, und daß die für die Brennstoffzufuhr und die Entsorgung vorgesehenen Kanäle (20,21) in denen als Anoden dienenden Schichten (4) einen Durchmesser von 1 bis 3 mm aufweisen.

9. Brennstoffzellenanordnung nach einem der Ansprüche 1 bis 8, dadurch gekennzeichnet, daß die für die Luftzu- und -ableitung vorgesehenen Kanäle (10,11) im Bereich der Anoden (4), der elektrisch leitenden Schichten (5) und der Festelektrolyte (3) zu den Schichten (3,4,5) hin gasdicht verschlossen sind, und daß die für die Brennstoffzuleitung und Entsorgung vorgesehenen Kanäle (20,21) im Bereich der Kathoden (2), der elektrisch leitenden Schichten (5) und der Festelektrolyte (3) zu den Schichten (2,3,5) hin gasdicht verschlossen sind.

10. Brennstoffzellenanordnung nach einem der Ansprüche 1 bis 9 dadurch gekennzeichnet, daß an den Stirnflächen eines jeden Brennstoffzellenblocks (1) keramische Gasverteilerplatten (15,16) angeordnet sind, die Leitungen (17A, 17B 18A, 18B) für Luft, Abluft, Brennstoff, Abgas und Reaktionsprodukte aufweisen, und daß die entsprechenden Leitungen über Kanäle (30,31,32, 33) innerhalb der Gasverteilerplatten (15 und 16) mit den entsprechenden Kanälen (10,11,20,21) in dem Brennstoffzellenblock (1) verbunden sind.

11. Verfahren zur Herstellung einer Brennstoffzellenanordnung, insbesondere nach Anspruch 1, dadurch gekennzeichnet, daß ein Brennstoffzellenblock (1) durch Aufeinandersetzen von Folien (2,3,4,5) mit definierten Eigenschaften und in einer definierten Reihenfolge gebildet wird, und daß die Folien (2,3,4,5) während eines Trocknungs-, Brennund Sinterprozesses zu einer unlösbaren Einheit verbunden werden.

12. Verfahren nach Anspruch 11, dadurch gekennzeichnet, daß die Folien (2,3,4,5) separat hergestellt, auf den Querschnitt des gewünschten Brennstoffzellenblocks (1) zugeschnitten und anschließend so aufeinandergesetzt werden, daß zwischen einer als Kathode dienenden Folie (2) und einer als Anode dienenden Folie (4) eine als Festelektrolyt dienende Folie (3) angeordnet wird, daß in direktem Anschluß an die Folien (2 und 4) nach außenhin je eine Folie (5) mit elektrisch leitenden Eigenschaften angeordnet wird, und daß im Anschluß an jede Folie (5) wieder eine Folie (2) bzw. eine Folie (3) angeordnet wird.

13. Verfahren nach einem der Ansprüche 11 oder 12 dadurch gekennzeichnet, daß die Folien (2,3,4,5) mit Löchern versehen werden, die nach dem Aufeinandersetzen der Folien (2,3,4,5) zu dem Brennstoffzellenblock (1) Kanäle (10,11,20,21) für die Zuleitung von Luft und den gasförmigen Brennstoff und die Ableitung von überschüssiger Luft, Brennstoff und Reaktionsprodukten bilden, und daß jeder Brennstoffzellenblock (1) an seinen Stirnflächen (1A, 1B) durch je eine Gasverteilerplatte (15,16) abgeschlossen wird, die senkrecht zu den Kanälen (10,11,20,21) angeordnet und mit den Folien (2,3,4,5) zu der den Brennstoffzellenblock (1) bildenden Einheit während des Trocknungs-, Brenn- und Sinterprozesses verbunden werden.

14. Verfahren nach einem der Ansprüche 11 bis 13, dadurch gekennzeichnet, daß die Kanäle (10,11) vor dem Trocknungs-, Brenn- und Sinterprozeß in den als Festelektrolyte, elektrisch leitende Schichten und Anoden dienenden Folien (3,4,5) mit einem Durchmesser von 2,5 bis 6 mm und in den als Kathode dienenden Folien mit einem um 0,5 bis 1 mm kleineren Durchmesser ausgebildet werden.

15. Verfahren nach einem der Ansprüche 11 bis 14, dadurch gekennzeichnet, daß die für die Brennstoffzuleitung und die Entsorgung vorgesehenen Kanäle (20,21) vor dem Trocknungs-, Brenn- und Sinterprozeß in den elektrisch leitenden Folien (5) und den als Kathode dienenden Folien (2) mit einem Durchmesser von 1,5 bis 4 mm und in den als Anode dienenden Folien (4) mit einem um 0,5 bis 1 mm kleineren Durchmesser ausgebildet werden.

# F i g.1

F i g.2

# F i g.3

# Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 536 893 (BROWN & BOVERI) * Patentansprüche 1,2; Figuren 1,3,4; Seite 2, rechte Spalte, Absatz 2; Seite 3, linke Spalte, Absatz 4 * | 1,2,4,5 | H 01 M 8/24 |
| Y | --- | 6,9,10 | |
| Y | FR-A-1 557 333 (SOC. AM. BROWN & BOVERI) * Seite 2, linke Spalte, Zeilen 24-28 * --- | 6 | |
| X | FR-A-2 306 540 (BROWN & BOVERI) * Patentansprüche 1,2; Seite 2, Zeile 24 * | 1,2,5 | |
| Y | * Patentansprüche 5,6 * --- | 10 | |
| Y | EP-A-0 289 226 (STANDARD OIL CO.) * Figuren 1,3,4; Patentansprüche 1,4,5,7; Spalte 3, Zeile 55 - Spalte 6, Zeile 23 * --- | 6,9 | |
| X | PATENT ABSTRACTS OF JAPAN, Band 13, Nr. 176 (E-749)[3524], 25. April 1989; & JP-A-1 7475 (MITSUBISHI HEAVY IND. LTD) 11-01-1989 * Zusammenfassung * --- | 1,2,3,4 ,5,11, 12 | RECHERCHIERTE SACHGEBIETE (Int. Cl.5)<br><br>H 01 M |
| Y | IDEM --- | 6 | |
| X | WO-A-8 606 762 (H.S.U.M.) * Patentansprüche 1,5; Figuren 1,2,3; Seite 7, Zeilen 6-10; Seite 8, Zeile 18 - Seite 9, Zeile 30 * | 1,2,4,5 | |
| A | --- -/- | 7 | |

Der vorliegende Recherchenbericht wurde für alle Patentansprüche erstellt

| Recherchenort | Abschlußdatum der Recherche | Prüfer |
|---|---|---|
| DEN HAAG | 07-08-1990 | D'HONDT J.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..................
& : Mitglied der gleichen Patentfamilie, übereinstimmendes Dokument

EPO FORM 1503 03.82 (P0403)

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 275 661  (ALLIED SIGNAL INC.)<br>* Patentansprüche 1,8; Figuren 1,2,9; Spalte 14, Zeile 47 - Spalte 16, Zeile 30; Spalte 10, Zeilen 42-47 *<br>--- | 1,2,3,4,5,11, 12 | |
| A | EP-A-0 275 661<br>--- | 6 | |
| X | US-A-4 799 936  (B. RILEY)<br>* Figur 2; Spalte 2, Zeilen 28-54; Spalte 3, Zeilen 22-33; Patentanspruch 2 * | 1,2,3,4,5,11, 12 | |
| A | --- | 6 | |
| P,X | PATENT ABSTRACTS OF JAPAN, Band 13, Nr. 493 (E-842)[3841], 8. November 1989; & JP-A-1 197 972 (AGENCY OF IND. SCIENCE & TECHNOL.) 09-08-1989<br>* Zusammenfassung *<br>--- | 1,2,4,5 | |
| P,X | PATENT ABSTRACTS OF JAPAN, Band 13, Nr. 374 (E-808)[3722], 18. August 1989; & JP-A-1 128 359 (JGC CORP.) 22-05-1989<br>* Zusammenfassung *<br>--- | 1,2,11, 13 | RECHERCHIERTE SACHGEBIETE (Int. Cl.5) |
| X | FR-A-1 534 093  (COMP. FR. THOMSON-HOTCHKISS BRANDT)<br>* Figur 3; Patentansprüche 1,2; Seite 2, linke Spalte, Absatz 4 *<br>----- | 1,2 | |

Der vorliegende Recherchenbericht wurde für alle Patentansprüche erstellt

| Recherchenort | Abschlußdatum der Recherche | Prüfer |
|---|---|---|
| DEN HAAG | 07-08-1990 | D'HONDT J.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes Dokument

EPO FORM 1503 03.82 (P0403)